# FASCICULE DE BREVET EUROPEEN

(11) **EP 1 494 419 B1**
(45) Date de publication et mention de la délivrance du brevet: **19.03.2008**
(21) Numéro de dépôt: 04013995.8
(22) Date de dépôt: 15.06.2004
(51) Int. Cl.: H04L 29/06

(54) **Système de transmission de paramètres caractéristiques d'une session de communication d'un terminal vers un serveur distant**
System zur Übertragung von charakteristischen Parametern einer Kommunikationssitzung von einem Endgerät zu einem entfernten Server
System transmitting characteristic parameters of a communication session from a terminal to a remote server

(30) Priorité: 01.07.2003 FR 0308073
(43) Date de publication de la demande: 05.01.2005
(73) Titulaire: FRANCE TELECOM, 75015 Paris (FR)
(72) Inventeur: Mathieu, Bertrand, 22300 Lannion (FR); Martin, Christophe, 22300 Lannion (FR); Roussel, Olivier, 22700 Perros Guirec (FR)

(56) Documents cités:
- EP-A- 1 372 309
- WO-A-02/05581
- US-A1- 2002 188 673
- YASUDA K ET AL: "EFFECTS AND PERFORMANCE OF CONTENT NEGOITIATION BASED ON CC/PP" LECTURE NOTES IN COMPUTER SCIENCE, SPRINGER VERLAG, NEW YORK, NY, US, 8 janvier 2001 (2001-01-08), pages 53-64, XP001086529 ISSN: 0302-9743
- BELLAVISTA P ET AL: "Active middleware for Internet Video on Demand: the QoS-aware routing solution in ubiQoS" MICROPROCESSORS AND MICROSYSTEMS, IPC BUSINESS PRESS LTD. LONDON, GB, vol. 27, no. 2, 15 mars 2003 (2003-03-15), pages 73-83, XP004413105 ISSN: 0141-9331

## Description

La présente invention concerne un système de transmission dynamique, vers au moins un serveur distant, de paramètres caractérisant une session de communication entre un ou plusieurs terminaux et le(s) serveur(s) distant(s). Un tel système a notamment pour but de permettre aux fournisseurs de services sur Internet de délivrer un contenu personnalisé à un utilisateur, c'est-à-dire un contenu adapté aux paramètres de son terminal, du réseau d'accès et à ses exigences.

L'invention se situe dans le domaine des réseaux de communication auxquels accèdent des terminaux hétérogènes, c'est à dire des terminaux de types différents. Elle trouve typiquement une application dans la diffusion et la fourniture d'informations disponibles sur le réseau Internet, ou sur tout autre réseau du même type, ou encore sur des bases de données, des fichiers etc..., vers des terminaux hétérogènes tels que des terminaux de type ordinateur personnel PC, des terminaux de type WAP (de l'anglais "Wireless Application Protocol"), des terminaux de type PDA (de l'anglais "Personal Digital Assistant") etc...

La diffusion de mêmes informations, représentées sous le même format, vers des terminaux de types différents est rendue difficile du fait de la diversité des terminaux et des réseaux d'accès utilisés. Les terminaux diffèrent notamment les uns des autres de par leurs caractéristiques physiques telles que la taille d'écran, la capacité de mémoire, les caractéristiques matérielles etc... Ainsi, par exemple, les téléphones mobiles de type WAP utilisent le langage WML (de l'anglais "Wireless Markup Langage"), tandis que les terminaux de type ordinateur personnel mettent en oeuvre un langage de type html (de l'anglais "Hypertext Markup Langage"). De la même manière, des terminaux de type PDA, bien que pouvant utiliser aussi le langage HTML, n'ont pas les mêmes caractéristiques qu'un ordinateur personnel PC. En effet la taille de leur écran est plus petite que celle d'un terminal de type PC, leurs capacités de traitement sont inférieures, les logiciels et matériels sont différents etc... . Les réseaux d'accès, quant à eux, diffèrent les uns des autres de par leur nature, telle que par exemple le haut-débit, le bas-débit, le sans fil etc... .

A ce jour, plusieurs solutions ont déjà été proposées à ce problème d'adaptabilité de l'information disponible. Pour toute la suite de la description, on définit par adaptabilité, les moyens, automatiques ou non, qui permettent aux contenus circulant sur un réseau de type Internet par exemple, d'être utilisables sur des terminaux hétérogènes, ayant des caractéristiques et des ressources très variées.

Une première solution permettant de diffuser un contenu multimédia sous différents formats, de façon à le rendre consultable à partir de n'importe quel type de terminal de communication, consiste à développer autant de versions de ce contenu qu'il existe de terminaux pouvant y accéder. Cependant cette technique, entièrement manuelle, nécessite un temps de développement important et les travaux de maintenance sont rendus très difficiles par le nombre élevé de versions du contenu, qui s'accroît avec le nombre de terminaux cibles.

Une autre solution apparue depuis quelques années et décrite dans la demande de brevet FR 2 809 844, consiste à gérer l'adaptation de contenu du côté du serveur web. Cette technique consiste à décrire le contenu à diffuser une seule fois dans un fichier de type XML puis à faire l'adaptation à l'aide de feuilles de styles, ou de feuilles de transformation, stockées dans le serveur. Les feuilles de styles se présentent par exemple sous forme de fichiers de type XSL et les feuilles de transformation se présentent par exemple sous forme de fichiers de type XSLT.

Les adaptations faites selon cette technique restent cependant encore très limitées en fonctionnalités d'adaptation car elles se basent uniquement sur le type de navigateur du terminal cible. Cette technique ne permet en effet de différencier que les différents types de navigateurs, tels que les navigateurs classiques pour PC, ou des navigateurs WAP de téléphones portables etc... L'adaptation de contenu se limite donc dans ce cas à décharger des pages html vers des ordinateurs de type PC, des pages WML vers des assistants personnels de type PDA ou des téléphones portables équipés de navigateurs WAP, etc... sans tenir compte des caractéristiques physiques détaillées du terminal, ni des préférences de l'utilisateur. De plus, il est judicieux parfois de ne pas envoyer d'images animées ou de vidéo lorsque le débit de la ligne notamment, n'est pas suffisant. Dans ce cas, il faut adapter les informations plus finement de manière à rendre la diffusion de données compatible également avec la nature du réseau d'accès.

Un groupe de travail ICAP (de l'anglais "Internet Content Adaptation Protocol") à l'IETF a défini une architecture client-serveur et un protocole de communication ICAP permettant à un périphérique tel qu'un cache de transmettre des messages http à un serveur d'application ICAP pour effectuer des traitements. Les traitements réalisés par le serveur d'application ICAP peuvent consister en des ajouts dynamiques de bandeaux publicitaires, des traductions de pages web, des filtrages d'information, des refus de se connecter à des sites web etc... Cependant, ces traitements ne concernent pas
l'adaptation de contenu en fonction de paramètres du terminal, des informations utilisateur ou des caractéristiques du réseau d'accès.

Au W3C (de l'anglais "World Wide Web Consortium"), un groupe de travail a par ailleurs défini une recommandation CC/PP (de l'anglais "Composite Capabilities/ Preference Profile") pour mieux définir les informations concernant le terminal utilisé et les préférences de l'utilisateur. Cette recommandation ouvre la voie à des adaptations de contenus personnalisés. Les capacités d'un composant (CC) peuvent être perçues comme un ensemble de méta-données ou de propriétés et descriptions sur le matériel ainsi que le logiciel utilisé.

Le principe de la recommandation CC/PP est notamment présenté dans le document de Yasuda et al. intitulé "Effects and Performance of Content Negotiation based on CC/PP", Lecture Notes in Computer Science, Springer Verlag, New York, 8 janvier 2001. Selon ce document, lorsqu'un terminal client CC/PP envoie une requête http à un serveur distant, il insère dans la requête un profil CC/PP, qui est stocké dans un serveur de stockage dédié. Sur réception de la requête, le serveur CC/PP adapte le contenu à fournir au terminal client en fonction du profil reçu.

Actuellement, il n'existe pas de navigateurs clients suivant cette norme alors que des produits côté serveurs existent. Il faut donc définir un moyen de fournir aux serveurs web distants les informations caractéristiques du terminal, du réseau d'accès et des préférences de l'utilisateur.

Aussi, le problème technique objet de la présente invention, consiste à proposer un système de transmission dynamique, vers au moins un serveur distant, de paramètres caractéristiques d'une session de communication entre au moins un terminal et ledit serveur distant, à travers un réseau du type à commutation de paquets, qui permettrait de se substituer au navigateur du terminal de manière à transmettre au serveur distant des informations sur les caractéristiques physiques du terminal, sur la nature du réseaux d'accès ainsi que sur les préférences de l'utilisateur du terminal, afin que le serveur puisse ensuite adapter et personnaliser le contenu à délivrer sur le terminal.

Dans le contexte particulier de la qualité de service pour des contenus vidéos, le document "Active middleware for Internet Video on Demand: the QoS-aware routing solution in ubiQoS", Microprocessors and Microsystems, IPC Business Press Ltd. Londres, de Bellavista et al., décrit une technique à base d'agents mobiles permettant d'adapter la qualité d'un contenu fourni depuis un serveur vidéo à un terminal client en fonction des préférences de l'utilisateur,des caractéristiques physiques du terminal et des ressources réseau. Cependant, ces paramètres sont transmis une fois pour toutes au serveur, à l'ouverture de la session de communication, au cours d'une phase préliminaire de négociation. Lors de la fourniture du contenu, le serveur ne peut donc pas tenir compte d'éventuelles modifications du profil utilisateur survenues en cours de session.

Le document de brevet EP 1 372 309 publié le 17.12.2003 décrit quant à lui un système comprenant des moyens de stockage de paramètres caractéristiques d'une session de communication entre un terminal et un serveur distant, ainsi qu'un module de transfert de ces paramètres vers le serveur distant, afin de réaliser une adaptation de contenu. Dans ce système, c'est sur requête du serveur distant que le module de transfert lui fournit les paramètres caractéristiques de la session de communication.

La solution au problème technique est obtenue, selon la présente invention, par le fait que le système comprend: un moyen de stockage desdits paramètres caractéristiques, et un module de transfert desdits paramètres caractéristiques à partir dudit moyen de stockage vers ledit serveur distant, ledit module de transfert se présentant sous la forme d'un noeud actif disposé entre le terminal et le serveur distant et étant agencé de manière à intercepter une requête en provenance du terminal et à destination du serveur distant, à récupérer les paramètres caractéristiques de ladite session de communication, puis à insérer dynamiquement lesdits paramètres dans ladite requête et à transmettre ladite requête ainsi transformée vers ledit serveur distant.

Ainsi, le module de transfert permet de chercher, dans le moyen de stockage, les paramètres caractéristiques de la session, c'est à dire notamment les caractéristiques du terminal, du réseau d'accès et/ou des préférences de l'utilisateur, et de les transférer dynamiquement au serveur distant à chaque requête, au cours d'une session de communication, de sorte que le serveur distant puisse personnaliser le contenu à délivrer sur le terminal en fonction des paramètres lui ayant été communiqués.

L'invention se rapporte en outre à un procédé de transmission dynamique, vers au moins un serveur distant, de paramètres caractéristiques d'une session de communication entre au moins un terminal et ledit serveur distant à travers un réseau du type à commutation de paquets. Ce procédé est remarquable en ce qu'il comprend les étapes consistant à :
- intercepter une requête émanant dudit terminal et à destination dudit serveur distant,
- récupérer les paramètres caractéristiques de la session de communication,
- insérer lesdits paramètres caractéristiques dans ladite requête et transmettre cette-dernière au serveur distant, de manière à ce qu'il puisse tenir compte de ces paramètres lorsqu'il décharge une page vers le terminal.

Un autre objet de l'invention concerne un module de transfert vers au moins un serveur distant de paramètres caractéristiques d'une session de communication entre au moins un terminal et ledit serveur distant. Ce module de transfert est remarquable en ce qu'il se présente sous la forme d'un noeud actif dans lequel est déployé dynamiquement au moins un code objet destiné à analyser une requête lui parvenant, puis à récupérer les paramètres caractéristiques avant de les insérer dans ladite requête, sous un format spécifique propre audit code objet.

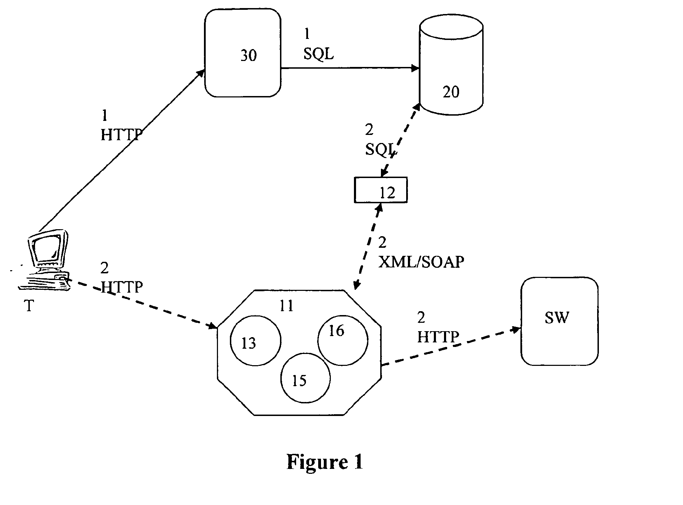

D'autres particularités et avantages de l'invention apparaîtront à la lecture de la description suivante faite à titre d'exemple illustratif et non limitatif en référence à la figure 1 annexée qui représente :
- un schéma illustrant le principe de fonctionnement d'un système de transmission de paramètres caractéristiques d'une session de communication selon un mode de réalisation.

Le principe de fonctionnement d'un système de transmission automatique, vers un serveur distant, de paramètres caractéristiques d'une session de communication sera mieux compris au regard de la figure 1.

Ce système a pour principal objectif de permettre de fournir à un serveur distant SW un certain nombre d'informations précises, notamment sur les caractéristiques du terminal T, sur les caractéristiques du réseau d'accès utilisé, et sur les préférences de l'utilisateur. Ces informations sont ensuite utilisées par le serveur SW distant pour adapter le service, c'est-à-dire par exemple la fourniture de contenus, à ces paramètres caractéristiques du terminal T, sur lequel sera déchargé le contenu demandé, du réseau d'accès et des préférences de l'utilisateur.

Le serveur distant SW est par exemple géré par un fournisseur d'accès à Internet ou, plus généralement, par un fournisseur de service. Dans la suite de la description, le terme "gestionnaire" est utilisé pour faire référence indifféremment à un fournisseur d'accès à Internet ou à un fournisseur de services gérant le serveur distant SW.

Le système comprend d'une part un moyen de stockage 20 des paramètres caractéristiques et un moyen 30 permettant à l'utilisateur de renseigner ces paramètres et de les adresser au moyen de stockage 20, et d'autre part un mécanisme 11, ou module de transfert, pour la fourniture de ces informations au serveur distant SW.

Deux types d'acteurs peuvent implémenter cette architecture. Ce peut par exemple être un fournisseur d'accès à Internet, qui offre ensuite le service attaché à cette architecture à des fournisseurs de services. Ce peut aussi être un opérateur de réseau d'accès qui offre le service attaché à cette architecture à des fournisseurs d'accès à Internet.

Dans la suite de la description, par souci de simplification, il n'est fait référence qu'à un seul terminal T, un seul module de transfert 11 et un seul serveur distant SW. Cependant l'architecture de ce système ne se limite pas à la gestion d'un seul terminal T ni d'un seul serveur distant SW. Elle permet la prise en compte de plusieurs modules de transfert 11 et de plusieurs terminaux T, se connectant à plusieurs serveurs distants SW, via un ou plusieurs fournisseurs d'accès à Internet ; un module de transfert 11 pouvant gérer un ou plusieurs serveurs distants SW.

Dans la suite de la description, on désigne par "paramètres caractéristiques d'une session" les informations caractérisant le terminal T, le réseau d'accès utilisé et les préférences de l'utilisateur, pour une session de communication particulière entre ce terminal T et le serveur distant SW.

Le système, tel qu'illustré sur la figure 1, permet dans une première étape, identifiée par le chiffre 1, de renseigner le moyen de stockage 20 sur les paramètres caractéristiques de la session à établir. Ces paramètres sont renseignés par l'utilisateur et modifiés par ce-dernier lorsqu'il le souhaite. Il n'est pas nécessaire de spécifier ces paramètres à chaque session, les données déjà renseignées étant sauvegardées dans le moyen de stockage 20. Dans une deuxième étape, identifiée par le chiffre 2 et les flèches en traits pointillés, il permet le transfert de ces informations vers le serveur distant SW via le noeud actif ou la noeud programmable.

Pour stocker les paramètres caractéristiques de la session à établir, plusieurs solutions peuvent être envisagées. Dans un premier cas, une application, tournant sur le terminal T, permet à l'utilisateur de ce terminal de renseigner les caractéristiques du terminal et ses préférences et de les stocker sur le terminal, par exemple dans un fichier ou une base de données locale. Une autre solution consiste à utiliser un serveur Web pour renseigner les informations et utiliser un cookie pour stocker ces informations sur le terminal. Encore une autre solution consiste à utiliser un serveur Web pour renseigner ces informations et une passerelle d'accès pour y stocker les informations. Dans ce cas, la passerelle est gérée soit par l'utilisateur du terminal, soit par le fournisseur de la passerelle, soit par l'opérateur du réseau d'accès. Enfin, une autre solution consiste à utiliser un serveur Web, pour renseigner les informations, et une base de données globale, centralisée ou non, pour stocker les informations.

Toutes ces solutions présentent des avantages et des inconvénients. En effet, si les caractéristiques sont stockées dans le terminal, il n'est pas besoin de préciser le terminal utilisé. Cependant, dès que l'utilisateur change de terminal, il faut alors re-déclarer les caractéristiques sur ce dernier terminal, même si celui-ci a les mêmes caractéristiques que le premier terminal utilisé. Par contre, lorsque les paramètres caractéristiques sont stockés dans le réseau, même si on change de terminal, ces informations prédéfinies sont disponibles pour n'importe quel autre terminal de l'utilisateur. Dans ce cas, la gestion du nomadisme de l'utilisateur, tant du point de vue mobilité que du point de vue terminal, peut être prise en compte.

Plusieurs solutions sont donc possibles. Dans la suite de la description, la solution retenue pour le renseignement (étape 1) du moyen de stockage 20 correspond au cas où les informations sont renseignées via un formulaire de déclaration disponible sur un serveur web dédié, référencé 30 sur la figure 1, et stockées dans une base de données 20 de ce serveur. Cette solution préférée permet d'englober le plus de cas d'utilisation possibles et de gérer le nomadisme.

Dans un exemple l'utilisateur doit connecter son terminal T sur un site Web prédéfini 30 destiné à gérer les formulaires de déclaration, et connecté à la base de données 20. L'utilisateur doit ensuite renseigner le formulaire de déclaration, par exemple au format PHP (de l'anglais "Personal Hypertext Preprocessor"), en donnant des informations notamment sur le type de terminal, la taille de l'écran, le nombre de couleurs, le son, le processeur etc....

Le serveur 30 étant relié à la base de données 20, il est capable de la mettre à jour en fonction des valeurs définies par l'utilisateur. Le serveur 30 peut communiquer avec la base de données 20 par exemple selon des requêtes SQL. Cette mise à jour étant faite, si l'utilisateur modifie les paramètres pendant la connexion, cette modification pourra être prise en compte immédiatement.

Il est à noter que certains paramètres peuvent être prédéfinis par défaut dans les formulaires, et peuvent être modifiés par sélection d'un autre paramètre dans une liste déroulante par exemple.

Les informations stockées dans la base de données 20 peuvent être de différentes nature et sont très variées. A titre d'exemple non exhaustif, on peut citer les caractéristiques suivantes :
Pour le matériel:
   - type de terminal (PC, PDA, téléphone portable, ...)
   - marque
   - modèle
   - mémoire vive
   - caractéristique audio (stéréo, pas de son, ...)
   - type d'écran
   - taille de l'écran
   - résolution écran
   - processeur
Pour le logiciel:
   - nom du système d'exploitation
   - version du système d'exploitation
   - applications (identifiant, nom, version, marque)
   - format audio (nom, format, standard, version)
   - format vidéo (nom, format, standard, version)
   - format images (nom, format, standard, version
   - types de protocoles supportés (nom, format, standard, version)
Pour les interfaces d'accès dans le domaine privé:
   - Wifi, Ethernet 100BT etc...
Pour le type de réseau d'accès utilisé:
   - ADSL, GPRS, UMTS, Wifi etc...

Il est préférable que la base 20 contienne le type de réseau d'accès utilisé par l'utilisateur (ADSL, UMTS, Wifi...) ainsi que la liste des interfaces utilisées dans le domaine privé car cela peut influer fortement le contenu à délivré sur le terminal. En effet, suivant le débit de la ligne de l'utilisateur, le fournisseur de service pourra choisir d'envoyer ou non une vidéo, des images ou même d'adapter des informations plus finement.

En plus de ces paramètres caractéristiques, on retrouve également, dans la base de données 20, un index d'entrée dans la base, c'est-à-dire une clé constituée par exemple d'un "login", c'est-à-dire d'un identifiant attaché au terminal T utilisateur ; par exemple d'un nom de "domaine" du fournisseur d'accès à Internet, tel que par exemple wanadoo (marque déposée) etc... ; de l'adresse IP du terminal utilisateur valable l'instant de la session ; de l'adresse IP du module de transfert 11 en charge du terminal utilisateur ; et éventuellement d'un champ « Clients » indiquant si gestionnaire du serveur distant SW, avec lequel la session de communication doit être établie, a souscrit ou pas au service attaché à l'architecture et consistant à prendre en compte les caractéristiques du terminal et du réseau d'accès ainsi que les préférences de l'utilisateur avant de décharger une page sur l'écran du terminal.

L'index d'entrée dans la base, encore dénommé "clé", qui est par exemple constituée du couple "login/domaine" mais qui peut être constituée d'autres paramètres, permet au serveur distant SW ou au terminal T de renseigner l'adresse IP allouée au terminal T pour la session en cours. Cette clé est le seul moyen d'accéder aux informations d'un utilisateur. L'adresse IP sert ensuite de deuxième clé pour accéder aux informations relatives à cette session. L'adresse IP est renseignée soit directement par le fournisseur d'accès à Internet, si la base 20 est hébergée chez lui, soit par le terminal, ce qui nécessite dans ce cas une modification du kit de connexion, ou par un élément intermédiaire appartenant à l'opérateur de réseau d'accès et localisé entre le terminal et le fournisseur d'accès à Internet, si la base 20 est hébergée chez l'opérateur de réseau d'accès.

La base de données 20 contient l'adresse IP utilisée par le terminal T lors de la session en cours. Or, dans le mode actuel de connexion en IPv4, cette adresse est susceptible d'être différente à chaque nouvelle connexion : les adresses sont attribuées aux terminaux T par les fournisseurs d'accès à Internet lors de la connexion. L'adresse IP n'étant pas fixe, il est nécessaire de mettre à jour la base 20 avec cette adresse à chaque connexion du terminal T. Si la base 20 est gérée par une entité tierce, par exemple par un opérateur de réseau d'accès, cela nécessite une modification du kit de connexion du fournisseur d'accès à Internet. En effet, dans ce cas le fournisseur d'accès à Internet doit renseigner la base de données 20 sur l'adresse IP attribuée au terminal T pendant la session en cours, par exemple grâce à la clé commune constituée par le couple "login/domaine". Si la base 20 est gérée par le fournisseur d'accès à Internet, alors dans ce cas, aucune modification du kit de connexion n'est nécessaire puisqu'il gère lui-même les attributions d'adresses IP et la base de données. Il est donc en mesure d'harmoniser les données sur les deux entités.

En ce qui concerne le transfert des paramètres caractéristiques de la session entre un terminal T et le serveur distant SW (étape 2), le mode de réalisation envisagé consiste à insérer dynamiquement les paramètres caractéristiques de la session de communication dans chaque requête, de type "http/get" par exemple, à destination d'un serveur distant SW au cours de cette session de communication. Pour cela, le module de transfert 11 est disposé entre le terminal T et le serveur distant SW et permet d'intercepter une requête de type http par exemple, de récupérer dans un moyen de stockage 20 les paramètres caractéristiques de la session de communication, puis d'insérer dynamiquement les paramètres dans cette requête http et de transmettre la requête ainsi transformée vers le serveur distant SW.

Pour cela, le module de transfert comprend un code objet destiné à analyser la requête lui parvenant, puis à effectuer un traitement sur les paramètres caractéristiques avant de les insérer dans ladite requête.

Le moyen de stockage dans lequel les paramètres sont récupérés est constitué soit par la base de données 20 du réseau, soit par un autre moyen de stockage de type table, base, fichier ou cookie par exemple, situé en local dans le module de transfert 11, dans le cas où ces paramètres ont déjà été récupérés une première fois au cours de la session et qu'ils ont été enregistrés en local.

Le système comprend en outre une interface 12 disposée entre le module de transfert 11 et le moyen de stockage 20 pour rendre compatible les protocoles de communication entre ces deux entités et gérer ainsi le dialogue entre elles. Les protocoles de communication entre ces différentes entités peuvent être variés. A titre d'exemple, le protocole de communication à distance SOAP (de l'anglais "Simple Object Access Protocol") sur HTTP (de l'anglais "HyperText Transfer Protocol") et une description des données en XML (de l'anglais "extended Markup Language") peut être utilisé entre le module de transfert 11 et l'interface 12. L'interrogation de la base de données 20 par l'interface peut être réalisée selon le protocole SQL.

Les paramètres caractéristiques sont remontés au serveur distant SW suivant une certaine structure, par exemple sous la forme d'un document XML avec des étiquettes XML définies. Ceci implique que le serveur distant SW connaisse cette structure et notamment les noms des étiquettes XML représentant les caractéristiques.

Le module de transfert 11 peut être géré par l'opérateur de réseau d'accès ou par le fournisseur d'accès à Internet selon les cas.

Pour mettre en place la relation entre la base 20 et le module de transfert 11, plusieurs implémentations sont possibles. Une implémentation est illustrée sur la figure 1.

Cette implémentation consiste à intégrer dans l'architecture une plate-forme de réseau actif en tant que module de transfert.

De manière connue, les noeuds actifs permettent d'effectuer des traitements sur les données contenues dans des paquets actifs qu'ils retransmettent, ce que les routeurs classiques ne peuvent pas faire. Ces traitements ne sont plus localisés en un seul endroit, c'est à dire sur le serveur et le terminal usager comme dans l'architecture client-serveur classique, mais ils sont délocalisés dans les différents noeuds actifs du réseau actif. Les noeuds actifs sont donc bien plus évolués que les routeurs traditionnels, car ils doivent pouvoir interpréter des programmes, être extensibles, et bien sûr savoir gérer le réseau.

Plus généralement, le module de transfert peut se présenter sous la forme d'un noeud programmable.

Dans cette implémentation, un code objet permettant d'insérer les données au format CC/PP 13 est déployé dans un noeud actif 11, ou noeud programmable. Ce code objet de type CC/PP 13 n'est alors plus un composant unique fonctionnant sur une machine quelconque mais un composant « actif » fonctionnant sur une plate-forme de réseau actif.

Dans le cas où l'utilisateur utilise déjà un proxy http pour se connecter à Internet, c'est le cas par exemple des proxy pour une entreprise, des proxy mis en oeuvre par un fournisseur d'accès à Internet ou des proxy installés chez un particulier ayant plusieurs terminaux, le rôle premier des proxy http étant de cacher l'adresse IP du terminal en la remplaçant par la sienne, il est clair que si le proxy http est situé entre le terminal utilisateur et le noeud actif 11, contenant le code objet CC/PP 13, l'insertion des paramètres caractéristiques du terminal au format CC/PP ne peut se faire puisque ce sont les caractéristiques du proxy http qui seront insérées et non les caractéristiques du terminal utilisateur. Pour que l'invention puisse être mise en oeuvre, elle impose donc que le noeud actif 11 soit localisé entre le terminal T utilisateur et un éventuel proxy http. Eventuellement, le noeud actif 11, dans lequel le code objet CC/PP 13 est déployé, peut être co-localisé avec le proxy http à condition que les opérations entre les composants se déroulent dans le bon ordre : code objet CC/PP 13 avant proxy http.

Lorsque le terminal T utilisateur établi une connexion à Internet via un fournisseur d'accès à Internet, le serveur distant SW ou le terminal T renseigne la base de données 20 sur l'adresse IP qui lui est allouée pour cette session.

Dans cette implémentation, les requêtes circulent forcément par le noeud actif 11, du fait de la configuration propre aux réseaux. Par conséquent, aucune configuration n'est nécessaire sur le terminal T. Ce mode d'implémentation présente donc l'avantage que l'insertion des paramètres caractéristiques de la session de communication dans les requêtes est transparente pour l'utilisateur du terminal T et pour le gestionnaire du serveur distant. Cependant, puisque les données originales des requêtes de l'utilisateur sont modifiées, cela implique qu'un module du noeud actif 11, identifié par la référence 15 sur la figure 1, gère les connexions TCP (de l'anglais "Transmission Control Protocol") et notamment les valeurs des attributs "Seq" (pour "Sequence number" en anglais, attribut permettant d'indiquer le nombre d'octets émis dans une transmission) et "Ack" (pour "Acknowledgement number" en anglais, attribut accusant réception des octets reçus dans une transmission) entre les terminaux utilisateur T et le serveur distant SW.

Sur réception d'un paquet IP, le noeud actif 11 détecte l'adresse IP du terminal T émetteur.

Si cette adresse est inconnue alors le noeud actif 11 interroge la base de données 20, via l'interface 12, pour détecter si le gestionnaire du serveur distant SW destinataire a souscrit au service attaché à l'architecture de ce système. S'il a souscrit au service, les informations (paramètres caractéristiques de la session de communication) correspondant à l'adresse IP du terminal T sont renvoyées au noeud actif 11. A la réception des informations correspondant à cette adresse, le noeud actif 11, ou noeud programmable, stocke en mémoire ces informations associées à l'adresse IP de l'utilisateur. De plus, un module de la base de données 20, un frontal d'écriture par exemple, enregistre pour cette session et ce terminal T, l'adresse IP du noeud actif 11 en charge du terminal utilisateur T et du serveur distant SW. Ainsi, en cas de modification des informations en cours de session, le module de la base 20 peut émettre une notification au noeud actif 11 pour lui indiquer que les informations de la session, correspondant à cette adresse IP, ont changé.

Dans le cas contraire, lorsque le gestionnaire du serveur distant SW n'a pas demandé à recevoir les paramètres caractéristiques de la session, le noeud actif 11 hébergeant le code objet CC/PP 13 et/ou tout autre code spécifique 16, stocke l'adresse IP du terminal T et celle du serveur distant SW dans une table indiquant qu'aucune insertion de paramètres caractéristiques de session n'est à faire pour cette paire d'adresses. Dans ce cas, les requêtes suivantes seront transmises immédiatement par le noeud actif 11 sans avoir à remonter jusqu'au code objet CC/PP 13 ou au code objet spécifique 16.

Selon les cas, le noeud actif 11 ajoute ou non les paramètres caractéristiques de la session dans la requête et retransmets cette dernière au serveur distant SW. Ainsi, le code objet CC/PP 13, ou autre 16, déployé dans le noeud actif 11 permet d'insérer de manière dynamique les paramètres caractéristiques de la session de communication dans la requête au format CC/PP, ou à un autre format spécifique propre à un autre code 16.

En fin de session, le fournisseur d'accès à Internet indique à la base 20 que la connexion est terminée. L'adresse IP du terminal T émetteur est supprimée de la base 20 et une notification est émise au code objet CC/PP 13 pour lui indiquer de supprimer non seulement les paramètres caractéristiques et l'adresse IP de ses tables et mémoires, mais aussi les informations stockées dans le noeud actif 11 qui l'héberge. Enfin l'adresse IP du noeud actif 11 en charge du terminal T est supprimée de la base 20 pour cette session.

Le fait d'utiliser une plate-forme de réseau actif comme module de transfert présente plusieurs avantages. Il est concevable d'imaginer qu'un ou plusieurs gestionnaire(s) de serveur(s) distant(s) SW souhaitent utiliser un ou plusieurs format(s) spécifique(s) d'autres standards ou éventuellement propriétaire(s), pour la gestion de ces informations, par exemple s'il(s) ne souhaite(nt) que quelques attributs et pas tous, ou alors selon un format bien défini et différent de la structure XML/RDF défini pour CC/PP. Dans ce cas, grâce à l'utilisation d'un noeud actif 11, ce(s) gestionnaire(s) sera(ont) en mesure de déployer, en dynamique, leur(s) propre(s) code(s) objet(s) 16 dans le noeud actif 11 pour effectuer le(s) traitement(s) qu'il(s) souhaite (nt) .

En effet, CC/PP est un standard défini au W3C, mais d'autres standards existent tels que UAProf défini à l'OMA (de l'anglais "Open Mobile Alliance"), Conneg défini à l'IETF ("Internet Engineering Task Force) pour la négociation etc...

De plus, certains standards émergeants, relatifs aux applications multimédia, tels que MPEG21, utilisent des caractéristiques utilisateurs pour réaliser l'adaptation de contenu multimédia. Le protocole CC/PP peut être utilisé conjointement avec MPEG21 mais aussi UAProf.

De ce fait, le module 16 déployé peut donc être un module en relation avec ces standards pour insérer les informations caractéristiques de la session de communication.

La présente invention s'applique donc pour un proxy CC/PP comme défini ci-dessus mais aussi pour un proxy d'un autre format.

L'utilisation d'un noeud actif permet donc d'imaginer de multiples et différentes utilisations de ces paramètres caractéristiques de la session et apporte ainsi évolutivité, souplesse et flexibilité.

Aussi, de par sa fonctionnalité, le déploiement dynamique et automatique d'un code spécifique 16 ainsi que la gestion de composant (code objet CC/PP 13) sera simplifiée, et les mises à jour seront automatisées.

Bien sûr, l'implémentation ci-dessus présentée n'est pas le seul exemple de mise en oeuvre du système selon l'invention. D'autres implémentations peuvent être envisagées, telles que, par exemple, l'utilisation d'un proxy CC/PP sur architecture ICAP en tant que module de transfert.

Le système qui vient d'être décrit est destiné à être intégré dans un système plus général de télécommunication quelconque comprenant au moins un terminal (T) destiné à communiquer avec au moins un serveur distant (SW) à travers un réseau de communication de type Internet par exemple.

Ce système permet de délivrer un service, auprès des fournisseurs de services ou des fournisseurs d'accès à Internet, qui peut être mis en oeuvre gratuitement ou bien faire l'objet d'un service à valeur ajoutée payant auquel les acteurs concernés (fournisseurs de services ou fournisseurs d'accès à Internet) doivent s'abonner. Dans ce dernier cas, le mode d'implémentation est un peu plus compliqué puisqu'il impose de gérer des tables de gestionnaires ayant souscrit au service. De plus, dans ce cas, il est préférable de songer à des mécanismes de cryptages des informations. Cependant, même si ce choix impose des contraintes technologiques supplémentaires, il n'affecte en rien le principe de l'invention et ne modifie que très peu les mécanismes décrits.

## Revendications

1. Système de transmission, vers au moins un serveur distant (SW), de paramètres caractéristiques d'une session de communication selon un format prédéterminé entre au moins un terminal (T) et ledit serveur distant (SW), à travers un réseau du type à commutation de paquets,
**caractérisé en ce que** ledit système est adapté à communiquer avec un terminal qui n'est pas apte à transmettre lesdits paramètres caractéristiques selon ledit format prédéterminé vers ledit serveur distant,
et **en ce que** ledit système comprend :
- un moyen de stockage (20) desdits paramètres caractéristiques, et
- un module de transfert (11) desdits paramètres caractéristiques à partir dudit moyen de stockage (20) vers ledit serveur distant (SW), ledit module de transfert (11) se présentant sous la forme d'un noeud programmable disposé entre ledit terminal (T) et ledit serveur distant (SW), et étant agencé de manière à intercepter une requête en provenance du terminal (T) et à destination du serveur distant (SW), à récupérer les paramètres caractéristiques de ladite session de communication, puis à insérer lesdits paramètres dans ladite requête selon ledit format prédéterminé et à transmettre ladite requête ainsi transformée vers ledit serveur distant (SW).

2. Système selon la revendication 1, **caractérisé en ce qu'**il comprend en outre une interface (12) disposée entre le module de transfert (11) et le moyen de stockage (20) pour leur permettre de dialoguer selon des protocoles différents.

3. Système selon la revendication 1 ou 2, **caractérisé en ce que** ledit module de transfert est apte à insérer lesdits paramètres caractéristiques dans ladite requête selon au moins deux formats distincts.

4. Système selonl'une des revendications précédentes, **caractérisé en ce que** ledit format prédéterminé est le format CC/PP.

5. Système selon l'une des revendications précédentes, **caractérisé en ce que** le moyen de stockage (20) est constitué par une base de données d'un serveur (30) dédié.

6. Système selon l'une des revendications précédentes, **caractérisé en ce que** les paramètres caractéristiques de la session regroupent les caractéristiques physiques du terminal (T), et/ou le type de réseau d'accès et/ou les préférences de l'utilisateur.

7. Système selon l'une quelconque des revendications précédentes, **caractérisé en ce que** les paramètres caractéristiques d'une session sont repérés par une clé unique construite sur la base d'au moins un identifiant et un nom de domaine.

8. Procédé de transmission, vers au moins un serveur distant (SW), de paramètres caractéristiques d'une session de communication selon un format prédéterminé entre au moins un terminal (T) et ledit serveur distant (SW) à travers un réseau du type à commutation de paquets, **caractérisé en ce que**, ledit terminal n'étant pas apte à transmettre lesdits paramètres caractéristiques selon ledit format prédéterminé vers ledit serveur distant, ledit procédé comprend les étapes consistant à :
intercepter une requête émanant dudit terminal (T) et à destination dudit serveur distant (SW),
récupérer les paramètres caractéristiques de la session de communication,
insérer lesdits paramètres caractéristiques dans ladite requête selon ledit format prédéterminé
et transmettre ladite requête ainsi transformée au serveur distant (SW).

9. Procédé selon la revendication 8, **caractérisé en ce qu'**une étape préalable consiste à stocker les paramètres caractéristiques de la session de communication dans un moyen de stockage (20).

10. Système de télécommunication comprenant au moins un terminal (T) destiné à communiquer avec au moins un serveur distant (SW) à travers un réseau à commutation de paquets de type Internet, **caractérisé en ce qu'**il comporte un système de transmission des paramètres caractéristiques de la session de communication selon l'une des revendications 1 à 7.

11. Module de transfert (11), vers au moins un serveur distant (SW), de paramètres caractéristiques d'une session de communication entre au moins un terminal (T) et ledit serveur distant (SW), **caractérisé en ce qu'**il se présente sous la forme d'un noeud programmable (11) disposé entre ledit terminal (T) et ledit serveur distant (SW), et agencé de manière à intercepter une requête en provenance du terminal (T) et à destination du serveur distant (SW), à récupérer les paramètres caractéristiques de ladite session de communication, puis à insérer lesdits paramètres dans ladite requête, selon un format prédéterminé choisi parmi au moins deux formats traités par ledit module, et à transmettre ladite requête ainsi transformée vers ledit serveur distant (SW).

12. Module de transfert selon la revendication 11, **caractérisé en ce que** ledit format prédéterminé est de type CC/PP (13).

## Claims

1. System for transmission, to at least one remote server (SW), of parameters characteristic of a communication session according to a predetermined format between at least one terminal (T) and the said remote server (SW), over a network of the packet-switched type,
**characterized in that** the said system is adapted to communicate with a terminal that is not capable of transmitting the said characteristic parameters according to the said predetermined format to the said remote server,
and **in that** the said system comprises:
- a means (20) for storing the said characteristic parameters, and
- a module (11) for transferring the said characteristic parameters from the said storage means (20) to the said remote server (SW), the said transfer module (11) having the form of a programmable node placed between the said terminal (T) and the said remote server (SW), and being arranged so as to intercept a request originating from the terminal (T) and intended for the remote server (SW), to retrieve the parameters characteristic of the said communication session, then to insert the said parameters into the said request according to the said predetermined format and to transmit the said request thus transformed to the said remote server (SW).

2. System according to Claim 1, **characterized in that** it also comprises an interface (12) placed between the transfer module (11) and the storage means (20) in order to allow them to communicate according to different protocols.

3. System according to Claim 1 or 2, **characterized in that** the said transfer module is capable of inserting the said characteristic parameters into the said request according to at least two distinct formats.

4. System according to one of the preceding claims, **characterized in that** the said predetermined format is the CC/PP format.

5. System according to one of the preceding claims, **characterized in that** the storage means (20) consists of a database of a dedicated server (30).

6. System according to one of the preceding claims, **characterized in that** the parameters characteristic of the session contain the physical characteristics of the terminal (T), and/or the type of access network and/or the user preferences.

7. System according to any one of the preceding claims, **characterized in that** the parameters characteristic of a session are marked by a unique key constructed on the basis of at least one identifier and one domain name.

8. Method for transmission, to at least one remote server (SW), of parameters characteristic of a communication session according to a predetermined format between at least one terminal (T) and the said remote server (SW) over a network of the packet-switched type, **characterized in that**, the said terminal not being capable of transmitting the said characteristic parameters according to the said predetermined format to the said remote server, the said method comprises the steps consisting in:
intercepting a request emanating from the said terminal (T) and intended for the said remote server (SW),
retrieving the parameters characteristic of the communication session,
inserting the said characteristic parameters into the said request according to the said predetermined format, and
transmitting the said request thus transformed to the remote server (SW).

9. Method according to Claim 8, **characterized in that** a prior step consists in storing the parameters characteristic of the communication session in a storage means (20).

10. Telecommunication system comprising at least one terminal (T) designed to communicate with at least one remote server (SW) over a packet-switched network of the Internet type, **characterized in that** it comprises a system for transmitting parameters characteristic of the communication session according to one of Claims 1 to 7.

11. Module (11) for transferring, to at least one remote server (SW), parameters characteristic of a communication session between at least one terminal (T) and the said remote server (SW), **characterized in that** it has the form of a programmable node (11) placed between the said terminal (T) and the said remote server (SW), and arranged so as to intercept a request originating from the terminal (T) and intended for the remote server (SW), to retrieve the parameters characteristic of the said communication session, then to insert the said parameters into the said request, according to a predetermined format chosen from at least two formats processed by the said module, and to transmit the said request thus transformed to the said remote server (SW).

12. Transfer module according to Claim 11, **characterized in that** the said predetermined format is of the CC/PP type (13).

## Patentansprüche

1. System zur Übertragung zu mindestens einem fernen Server (SW) von charakteristischen Parametern einer Kommunikationssitzung gemäß einem vorbestimmten Format zwischen mindestens einem Endgerät (T) und dem fernen Server (SW) über ein Netz vom Typ mit Paketübermittlung,
**dadurch gekennzeichnet, dass** das System geeignet ist, um mit einem Endgerät, zu kommunizieren, das nicht in der Lage ist, die charakteristischen Parameter gemäß dem vorbestimmten Format zum fernen Server zu übertragen,
und dass das System aufweist:
- eine Speichereinrichtung (20) der charakteristischen Parameter, und
- einen Übertragungsmodul (11) der charakteristischen Parameter ausgehend von der Speichereinrichtung (20) zum fernen Server (SW), wobei der Übertragungsmodul (11) in Form eines programmierbaren Knotens vorliegt, der zwischen dem Endgerät (T) und dem fernen Server (SW) angeordnet und so eingerichtet ist, dass er eine vom Endgerät (T) kommende und für den fernen Server (SW) bestimmte Anfrage auffangen, die charakteristischen Parameter der Kommunikationssitzung abrufen und dann die Parameter in die Anfrage gemäß dem vorbestimmten Format einfügen und die so umgewandelte Anfrage an den fernen Server (SW) übertragen kann.

2. System nach Anspruch 1, **dadurch gekennzeichnet, dass** es außerdem eine Schnittstelle (12) aufweist, die zwischen dem Übertragungsmodul (11) und der Speichereinrichtung (20) angeordnet ist, um es ihnen zu ermöglichen, gemäß unterschiedlichen Protokollen zu dialogisieren.

3. System nach Anspruch 1 oder 2, **dadurch gekennzeichnet, dass** der Übertragungsmodul in der Lage ist, die charakteristischen Parameter in die Anfrage gemäß mindestens zwei unterschiedlichen Formaten einzufügen.

4. System nach einem der vorhergehenden Ansprüche, **dadurch gekennzeichnet, dass** das vorbestimmte Format das Format CC/PP ist.

5. System nach einem der vorhergehenden Ansprüche, **dadurch gekennzeichnet, dass** die Speichereinrichtung (20) aus einer Datenbank eines dedizierten Servers (30) besteht.

6. System nach einem der vorhergehenden Ansprüche, **dadurch gekennzeichnet, dass** die charakteristischen Parameter der Sitzung die physikalischen Charakteristiken des Endgeräts (T) und/oder den Typ des Zugriffsnetzes und/oder die Präferenzen des Benutzers umfassen.

7. System nach einem der vorhergehenden Ansprüche, **dadurch gekennzeichnet, dass** die charakteristischen Parameter einer Sitzung durch einen einzigen Schlüssel markiert werden, der auf der Basis mindestens einer Kennung und eines Domain-Namens konstruiert wird.

8. Verfahren zur Übertragung zu mindestens einem fernen Server (SW) von charakteristischen Parametern einer Kommunikationssitzung gemäß einem vorbestimmten Format zwischen mindestens einem Endgerät (T) und dem fernen Server (SW) über ein Netz vom Typ mit Paketübermittlung, **dadurch gekennzeichnet, dass**, da das Endgerät nicht in der Lage ist, die charakteristischen Parameter gemäß dem vorbestimmten Format zum fernen Server zu übertragen, das Verfahren die Schritte aufweist, die darin bestehen:
eine vom Endgerät (T) stammende und für den fernen Server (SW) bestimmte Anfrage aufzufangen,
die charakteristischen Parameter der Kommunikationssitzung abzurufen,
die charakteristischen Parameter in die Anfrage gemäß dem vorbestimmten Format einzufügen, und
die so umgewandelte Anfrage an den fernen Server (SW) zu übertragen.

9. Verfahren nach Anspruch 8, **dadurch gekennzeichnet, dass** ein vorhergehender Schritt darin besteht, die charakteristischen Parameter der Kommunikationssitzung in einer Speichereinrichtung (20) zu speichern.

10. Telekommunikationssystem, das mindestens ein Endgerät (T) aufweist, das dazu bestimmt ist, mit mindestens einem fernen Server (SW) über ein Paketübermittlungsnetz vom Typ Internet zu kommunizieren, **dadurch gekennzeichnet, dass** es ein System zur Übertragung der charakteristischen Parameter der Kommunikationssitzung nach einem der Ansprüche 1 bis 7 aufweist.

11. Übertragungsmodul (11) zu mindestens einem fernen Server (SW) von charakteristischen Parametern einer Kommunikationssitzung zwischen mindestens einem Endgerät (T) und dem fernen Server (SW), **dadurch gekennzeichnet, dass** er in Form eines programmierbaren Knotens (11) vorliegt, der zwischen dem Endgerät (T) und dem fernen Server (SW) angeordnet und eingerichtet ist, um eine vom Endgerät (T) kommende und für den fernen Server (SW) bestimmte Anfrage aufzufangen, die charakteristischen Parameter der Kommunikationssitzung abzurufen, dann die Parameter in die Anfrage gemäß einem vorbestimmten Format einzufügen, das aus mindestens zwei von dem Modul verarbeiteten Formaten ausgewählt wird, und die so umgewandelte Anfrage an den fernen Server (SW) zu übertragen.

12. Übertragungsmodul nach Anspruch 11, **dadurch gekennzeichnet, dass** das vorbestimmte Format vom Typ CC/PP (13) ist.
